(19) Europäisches Patentamt
European Patent Office
Office européen des brevets

(11) **EP 1 624 321 B1**

(12) **FASCICULE DE BREVET EUROPEEN**

(45) Date de publication et mention
de la délivrance du brevet:
**28.03.2007 Bulletin 2007/13**

(51) Int Cl.:
***G01V 1/28*** (2006.01)

(21) Numéro de dépôt: **05291620.2**

(22) Date de dépôt: **28.07.2005**

(54) **Méthode pour construire un modèle d'un milieu hétérogène décrit par plusieurs paramètres à partir de données exprimées dans des échelles de temps différentes**

Methode zur Erstellung eines heterogenen Untergrundmodells beschrieben durch mehrere Parameter welche Daten in unterschiedlichen Zeitskalen darstellen.

Method for construction of a heterogeneous subsurface model determined by a plurality of parameters on the basis of data expressed in different time scales

(84) Etats contractants désignés:
**GB NL**

(30) Priorité: **02.08.2004 FR 0408517**

(43) Date de publication de la demande:
**08.02.2006 Bulletin 2006/06**

(73) Titulaire: **Institut Français du Pétrole**
**92852 Rueil Malmaison Cédex (FR)**

(72) Inventeurs:
• **Agullo, Yohan**
**92500 Rueil-Malmaison (FR)**
• **Mace-Prieur, Danièle**
**92500 Rueil-Malmaison (FR)**
• **Tonellot, Thierry**
**92500 Rueil-Malmaison (FR)**
• **Lavielle, Marc**
**91140 Villebon-Sur-Yvette (FR)**

(56) Documents cités:
**US-B1- 6 381 543     US-B1- 6 522 973**
**US-B1- 6 662 147**

## Description

L'invention concerne une méthode pour construire un modèle représentatif d'un milieu hétérogène tel que le sous-sol, décrit par plusieurs paramètres (qui peuvent être des grandeurs physiques ou des combinaisons de grandeurs physiques), à partir de données exprimées dans des échelles de temps différentes.

La méthode s'applique notamment dans le cadre de l'exploration pétrolière pour obtenir des représentations quantitatives et des images plus fines de la structure ou configuration d'une zone souterraine et elle facilite la caractérisation des gisements d'hydrocarbures. Dans ce cadre, les données exprimées à des échelles de temps différentes peuvent correspondre aux données sismiques multicomposantes avant sommation.

## État de la technique

Les documents suivants que l'on va citer dans le cours de la description ci-après, illustrent l'état de la technique :

- Aki, K., and Richards, P.G.,1980, Quantitative seismology: Theory and methods, Vol.1: W.H. Freeman and Co

- De Nicolao, A., Drufuca, G., and Rocca, F., 1993,Eigenvalues and eigenvectors of linearized elastic inversion: Geophysics, 58, 670-679.

- Gaiser, J. E., 1996, Multicomponent Vp/Vs correlation analysis: Geophysics, 61, 1137-1149.

- Garotta, R., Granger, P-Y., and Dariu, H., 2000, Elastic parameter derivations frommulti-component data, 70th Ann. Internat. Mtg., Soc. Expl. Geophys., Expanded Abstracts, 154-157.

- Lebrun, D., Richard, V., Mace, D., and Cuer, M., 2001, SVD for multi-offset linearized inversion: Resolution analysis in multicomponent acquisition: Geophysics, 66, 871-882.

- Tonellot, T., Macé, D., Richard, V., and Cuer, M., 2001, Joint stratigraphic inversion of angle -limited stacks, 71th Ann. Internat. Mtg., Soc. Expl. Geophys., Expanded Abstracts, 227-230.

L'inversion est, d'une manière générale, une technique permettant d'estimer un modèle décrit par un ou plusieurs paramètres à partir de données indirectes. En règle générale, cette technique est utilisée lorsque l'on ne peut pas mesurer directement les paramètres. Cette technique suppose que l'on sait résoudre le problème qui consiste à prédire les données lorsque l'on connaît les paramètres du modèle (étape de modélisation qui permet d'obtenir des données dites données synthétiques).

C'est le cas, par exemple, dans le cadre de l'exploration pétrolière où l'on recherche des informations géologiques et pétrophysiques, caractérisant un réservoir tridimensionnel, mais où l'on ne peut généralement mesurer, sur une grande échelle que des informations sismiques. Dans ce cadre, l'inversion a pour but de déterminer des paramètres, tels que les impédances relatives aux ondes P et aux ondes S ou la densité, à partir de données sismiques issues d'ondes émises dans le milieu par une source sismique. Ces ondes se propagent dans le sous-sol et se réfléchissent sur les discontinuités du milieu. Elles sont enregistrées par des capteurs couplés avec la formation souterraine et collectées par un dispositif d'acquisition. Les données sismiques que l'on exploite dans le cadre de la description de la méthode contiennent ainsi les informations de variation de l'amplitude avec le déport (distance source-récepteur), c'est à dire avec l'angle d'incidence ; elles sont dites données sismiques avant sommation. Il existe plusieurs types d'ondes se propageant dans un milieu élastique. Parmi les plus utilisées dans l'industrie pétrolière, on peut citer les ondes P (ondes compressionelles ou encore ondes longitudinales) qui correspondent à un déplacement dans la direction de propagation, et les ondes S (ondes de cisaillement ou encore ondes transversales) qui correspondent à un déplacement dans un plan perpendiculaire à la direction de propagation et ne se propagent pas dans un milieu fluide. Ces ondes P et S se propagent à des vitesses différentes, la vitesse Vp des ondes P étant supérieure à la vitesse Vs des ondes S. Elles se réfléchissent aux interfaces de discontinuité du sous-sol et sont enregistrées au niveau du dispositif d'acquisition. Les ondes P peuvent se réfléchir en ondes du même type (réflexions PP)'ou en ondes de l'autre type (réflexions PS). Les techniques d'acquisition terrestre et de nouvelles techniques d'acquisition marine pour lesquelles les récepteurs sont posés au fond de la mer et enregistrent les 3 composantes (x,y,z) du déplacement (données sismiques multicomposantes), permettent d'enregistrer directement les ondes P et S réfléchies dans le sous-sol. Les réflexions PP dites données PP correspondent à l'enregistrement d'un signal (sismogramme) issu d'ondes transmises en onde de type P et réfléchies en onde de type P dans le sous-sol. Ce signal a une amplitude variable en fonction du temps, dit temps PP. De même, les réflexions PS dites données PS correspondent à l'enregistrement d'un signal issu d'ondes transmises en onde de type P et réfléchies en onde de type S dans le sous-sol. Ce signal a une amplitude variable en fonction du temps, dit temps PS. Les ondes P et S se propageant à des vitesses différentes, un même réflecteur géologique correspondra donc a une variation de signal à un temps PP et à un temps PS, ces temps étant différents l'un de l'autre. D'autre part comme ces deux variations de signal correspondent à des réflexions de types différents elles ont des valeurs différentes.

Dans le cas d'un milieu tel que le sous-sol, les grandeurs physiques descriptives sont généralement l'impédance qu'il présente relativement à ces ondes P ou à ces ondes S ou encore sa densité. Il est clair que plus l'on dispose de grandeurs physiques pour caractériser le milieu, plus le milieu est correctement décrit. C'est pourquoi, dans l'industrie pétrolière, il est devenu tout aussi important d'estimer les impédances P que les impédances S. Ces deux grandeurs physiques portent chacune des informations différentes, qu'il est nécessaire d'exploiter pour correctement caractériser un réservoir.

À partir des données PP il est possible d'effectuer une inversion permettant d'estimer à la fois les impédances P, les impédances S et la densité. Il en est de même à partir des données PS. Cependant, plusieurs auteurs (De Nicolao et al., 1993; Lebrun et al., 2001) ont montré que parmi les trois paramètres classiquement utilisés et précédemment cités, l'impédance P (ou plus précisément sa variation relative $\dfrac{\Delta Ip}{Ip}$) est le paramètre le mieux déterminé à partir des données PP ; en revanche, la confiance que l'on peut avoir dans la variation relative de l'impédance S est plus limitée, et dépend de facteurs tels que le niveau de bruit, la gamme d'angles d'incidence disponibles et les erreurs sur la détermination du modèle de vitesse. Cependant, si l'on dispose de données PS, il est possible d'estimer de façon fiable la variation relative de l'impédance S. D'où l'intérêt grandissant pour l'acquisition et le traitement de données sismiques multicomposantes. Quant à la densité, elle est difficilement estimable quel que soit le type de données utilisées.

Dans l'industrie pétrolière des méthodes d'inversion ont été développées permettant de prendre en compte des données sismiques monocomposantes, correspondant à un type de réflexion donné, et des données directes ainsi que des informations géologiques sur le sous-sol. On construit un modèle a priori (1D, 2D ou 3D) d'un ou plusieurs paramètres caractéristiques du milieu, par interprétation des données directes ou indirectes connues, et l'on définit des opérateurs de covariance décrivant les incertitudes sur ce modèle a priori ainsi que les incertitudes sur les données indirectes enregistrées. On part d'un modèle initial (par exemple le modèle a priori) et on calcule des sismogrammes synthétiques qui constituent la réponse du modèle. On les compare aux sismogrammes réels obtenus par exploration sismique et on minimise de proche en proche les écarts constatés entre eux selon des normes associées aux opérateurs de covariance choisis en fonction d'une évaluation des incertitudes sur le modèle a priori et les enregistrements sismiques.

Les différentes approches connues diffèrent notamment par le nombre de paramètres décrivant le milieu, la dimension du modèle a priori, et la richesse des possibilités offertes dans la prise en compte des paramètres d'incertitude. Elles consistent à obtenir le modèle optimal qui minimise une fonction coût, somme d'une fonction coût dite sismique, et d'une fonction coût dite géologique. La fonction coût sismique représente l'écart (au sens de la norme induite par l'opérateur de covariance relatif aux données) entre les données observées (sismogrammes réels) et les données synthétiques associées au modèle courant. La fonction coût géologique mesure l'écart entre le modèle courant et le modèle a priori (au sens de la norme induite par l'opérateur de covariance relatif au milieu).

Des méthodes existent qui permettent d'estimer plusieurs paramètres dans un milieu. Parmi ces approches on peut citer celle décrite dans le brevet FR 2-800-473 du demandeur, qui permet d'obtenir un modèle optimal, en 2 ou 3 dimensions (2D ou 3D), décrit par plusieurs paramètres à partir de données indirectes correspondant à un seul type de données (PP par exemple).

Lorsque l'on dispose de plusieurs types de données (PP et PS par exemple), il faut pouvoir les inverser conjointement pour tirer parti de l'information contenue dans l'impédance P estimée à partir des données PP et dans l'impédance S estimée à partir des données PS. La difficulté du problème réside dans le fait que les données PP et PS étant fournies à des échelles de temps différentes (les vitesses P et S sont différentes), il faut trouver une solution pour associer avec précision les évènements correspondant à un même réflecteur géologique ; cela revient à estimer le rapport des vitesses P et S que l'on notera γ.

Deux types d'approche peuvent être envisagés pour inverser conjointement des données sismiques multicomposantes avant sommation.

La première approche consiste à estimer préalablement les modèles de vitesse P et S (par migration et analyse de focalisation par exemple) et à prendre, comme données de l'inversion jointe, les résultats (exprimés en profondeur) d'une migration profondeur avant sommation. Cette approche est séduisante mais reste délicate car il faut avoir estimé des vitesses P et S suffisamment précises.

La deuxième approche considère les résultats de la migration temps comme entrées pour l'inversion jointe et doit alors résoudre le problème crucial des mises en correspondance des temps d'arrivée des réflexions PP et PS. C'est dans ce contexte que se place la méthode selon l'invention.

Différentes techniques de mise en correspondance, directement à partir des données PP et PS, existent (Gaiser, 1996) mais elles supposent implicitement que les contrastes des impédances P et S sont similaires ou au moins ont le même signe, ce qui n'est pas toujours le cas, particulièrement au niveau du réservoir. Dans l'approche de Garotta et al. (2000) les amplitudes des données PP et PS, à une position latérale et à un temps donné (mais pour différents angles d'incidence), servent à calculer les attributs AVO (Amplitude Versus Offset) classiques, par des méthodes de régression linéaire :

- l'ordonnée à l'origine PP, appelée "intercept" PP et exprimée en temps PP ;

- le "gradient" PP exprimé en temps PP ;

- le "gradient" PS exprimé en temps PS;

La variation relative du rapport (γ) des vitesses P et S, peut alors être exprimée par une formule où interviennent γ, l'intercept PP, le gradient PP et le gradient PS transformé en temps PP en utilisant γ. D'autre part, pour une association donnée des temps PP et PS, on peut calculer le γ correspondant. Le rapport γ calculé par Garotta et al. est celui qui minimise l'écart entre la variation relative de γ issue des temps de propagation et la variation relative de γ issue des attributs AVO.

La méthode selon l'invention concerne une méthode pour construire un modèle représentatif d'un milieu hétérogène tel que le sous-sol, décrit par un ou plusieurs paramètres, à partir de données exprimées dans des échelles de temps différentes, tout en s'affranchissant, au moins en partie, du bruit contenu dans ces données.

**La méthode selon l'invention**

L'invention concerne une méthode pour construire un modèle représentatif d'un milieu hétérogène décrit par au moins une combinaison d'au moins une grandeur physique (appelée paramètre dans la description de la méthode). Cette construction est réalisée à partir d'une procédure d'inversion conjointe de données exprimées dans des échelles de temps différentes. La méthode comporte les étapes suivantes :

- on détermine une première estimation d'au moins une combinaison de grandeurs physiques dudit modèle à partir des données exprimées dans une première échelle de temps;

- on détermine au moins une seconde estimation de ladite combinaison à partir des données exprimées dans au moins une seconde échelle de temps (si au cours de l'inversion conjointe, on souhaite inverser des données exprimées dans *x* échelles de temps, il faudra alors estimer la combinaison à partir de chacune de ces *x* données ou alors estimer une combinaison commune pour chaque paire d'échelles de temps considérée)

- on effectue une analyse desdites estimations pour déterminer au moins un facteur d'échelle permettant d'établir une correspondance entre ladite première échelle de temps et ladite seconde échelle de temps ;

- on réalise, dans le but de construire ledit modèle représentatif, ladite procédure d'inversion conjointe, en minimisant une fonction coût dans laquelle ledit facteur d'échelle permet d'exprimer les données synthétiques associées au modèle courant de l'inversion décrit dans une échelle de temps, dans une autre échelle de temps, de façon à évaluer un écart entre ces données synthétiques et les données exprimées dans ladite autre échelle de temps.

Selon l'invention, les données exprimées dans des échelles de temps différentes peuvent être des données issues d'émissions d'ondes dans le milieu, comme par exemple des ondes élastiques ou des ondes électromagnétiques. Ces données peuvent être des données sismiques multicomposantes avant sommation.

Les différentes échelles de temps peuvent être l'échelle des temps d'arrivées des ondes P non converties (réflexions PP), l'échelle des temps d'arrivées des ondes P converties (réflexions PS), l'échelle des temps d'arrivées des ondes S non converties (réflexions SS), ou encore, l'échelle des temps d'arrivées des ondes S converties (réflexions SP).

Dans un mode particulier de réalisation de la méthode selon l'invention, la combinaison de grandeurs physiques peut représenter des impédances. Dans le cas où l'on utilise des données sismiques multicomposantes avant sommation, ces impédances peuvent être des impédances relatives aux ondes S.

Selon un mode de réalisation de l'invention, l'estimation des combinaisons de grandeurs physiques peut comporter l'utilisation d'une inversion monocomposante. Celle-ci peut être une inversion stratigraphique comportant l'utilisation d'information a priori incluant des données mesurées in situ.

Le facteur d'échelle peut être déterminé en minimisant la dissemblance des estimations de combinaisons de grandeurs physiques dudit modèle. Il est parfois judicieux de ne déterminer que la partie basse fréquence dudit facteur d'échelle. Il est également parfois préférable d'effectuer un paramétrage du facteur d'échelle dans une base constituée d'un nombre limité de fonctions de base. La détermination du facteur est alors nettement accélérée.

Enfin, selon la méthode les données initiales qui sont exprimées dans des échelles de temps différentes ne subissent pas de transformation d'échelle.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre la mise en correspondance préliminaire d'événements PP et PS correspondant à 2 réflecteurs géologiques $E_A$ et $E_B$.

- la figure 2A montre l'impédance de type P du modèle exact en temps PP $\left(I_P^{PP}\right)$, mise dans la bande passante de la sismique PP.

- la figure 2B montre l'impédance de type S du modèle exact en temps PP $\left(I_S^{PP}\right)$, mise dans la bande passante de la sismique PP.

- la figure 2C montre l'impédance de type S du modèle exact en temps PS $\left(I_S^{PS}\right)$, mise dans la bande passante de la sismique PS.

- la figure 3A montre l'impédance de type P en temps PP $\left(I_P^{PP}\right)$ du résultat d'inversion monocomposante des données PP, mise dans la bande passante de la sismique PP.

- la figure 3B montre l'impédance de type S en temps PP $\left(I_S^{PP}\right)$ du résultat d'inversion monocomposante des données PP, mise dans la bande passante de la sismique PP.

- la figure 3C montre l'impédance de type S en temps PS $\left(I_S^{PS}\right)$ du résultat d'inversion monocomposante des données PS, mise dans la bande passante de la sismique PS.

- la figure 4A montre l'histogramme de l'erreur sur la transformation en temps PP obtenue en utilisant la valeur moyenne de $\eta$ pour transformer les temps PS en temps PP.

- la figure 4B montre l'histogramme de l'erreur sur la transformation en temps PP obtenue en utilisant $\eta_{LF}$ déterminé à l'étape 2 pour transformer les temps PS en temps PP.

- la figure 5A montre l'impédance Ip en temps PP du résultat de l'inversion conjointe des données PP et PS, mise dans la bande passante de la sismique PP.

- la figure 5B montre l'impédance Is en temps PP du résultat d'inversion conjointe des données PP et PS, mise dans la bande passante de la sismique PP.

**Description détaillée de la méthode**

La méthode selon l'invention concerne une méthode pour construire un modèle représentatif d'un milieu hétérogène tel que le sous-sol, décrit par un ou plusieurs paramètres (qui peuvent être des grandeurs physiques ou des combinaisons de grandeurs physiques), à partir de données exprimées dans des échelles de temps différentes. Appliquée à l'exploration pétrolière, la méthode permet d'améliorer la description quantitative d'une zone réservoir à partir de données sismiques multicomposantes avant sommation. Des prétraitements appropriés permettent, à partir des données multicomposantes enregistrées et pour chaque gamme d'angle d'incidence considérée, de fournir par exemple, d'une part des données (dites données PP) correspondant aux réflexions PP et d'autre part des données (dites données PS) correspondant aux réflexions PS.

La méthode est décrite dans un cadre pétrolier, dans le cas où l'on dispose de données PP et de données PS. La méthode peut être très facilement généralisée aux autres cas (réflexions SP, réflexions SS). De façon générale, elle s'applique à tous types de données exprimées dans des échelles de temps différents.

Les données sismiques que l'on exploite dans le cadre de la méthode contiennent les informations de variation de l'amplitude avec le déport. Les données directes et indirectes dont on dispose pour construire un modèle a priori du milieu sont par exemple des mesures diagraphiques, des données d'exploration sismique, et d'autres données que l'on possède suite à des études géologiques préalables du milieu (carottes, laboratoires, ...).

La méthode selon l'invention, propose une technique d'inversion permettant, lorsqu'elle est appliquée à l'exploration pétrolière, d'estimer conjointement les impédances P et S du milieu par une méthode d'inversion jointe des données PP et PS, qui prend en compte des informations a priori telles que des données de puits et des connaissances géologiques sur la zone étudiée.

La méthode étend la technique d'inversion stratigraphique monocomposante décrite dans Tonellot et al., 2001, (ainsi que dans le brevet FR 2.800.473 du demandeur) au cas de données multicomposantes. Le problème de mise en correspondance des temps PP et PS relatif à l'utilisation de données multicomposantes est résolu par une approche originale.

La méthodologie peut se décomposer en trois étapes principales. La première étape consiste à estimer séquentiellement des paramètres du modèle, décrits dans chaque échelle de temps, à partir des données exprimées dans des échelles de temps différentes. Dans la seconde étape on détermine un facteur d'échelle, noté η, en mettant au mieux en correspondance un même paramètre estimé dans les différentes échelles de temps. Enfin, la troisième étape correspond à l'inversion jointe des données en utilisant le facteur d'échelle η estimé à la seconde étape.

Ces étapes sont décrites ci-après, dans le cadre pétrolier, en utilisant les ondes P se réfléchissant en ondes P (réflexions PP) et en ondes S (réflexions PS), mais de façon générale, la méthode s'applique à tous types de données exprimées dans des échelles de temps différentes.

1. Estimations séquentielles de paramètres à partir des données exprimées dans des échelles de temps différentes

Les données exprimées dans des échelles de temps différentes sont, dans notre exemple, les données PP correspondant aux réflexions PP et les données PS correspondant aux réflexions PS. La technique utilisée dans le cadre de l'invention appliquée à l'exploration pétrolière consiste à estimer séquentiellement les paramètres descriptifs du milieu à partir de chacun de ces deux types de données. On estime tout d'abord les impédances P et les impédances S à partir des données PP (en temps PP) puis les impédances S à partir des données PS (en temps PS).

Dans un mode de réalisation particulier, il est possible de réaliser ces estimations à partir de la méthodologie d'inversion stratigraphique monocomposante de Tonellot et al (2001). Celle-ci est appliquée séquentiellement aux données PP puis aux données PS. Pour la description de cette méthodologie, on choisit une modélisation telle que les données synthétiques soient le résultat de la convolution des coefficients de réflexion par l'ondelette ; mais la méthodologie reste la même quelle que soit la modélisation choisie. Concernant l'inversion stratigraphique PP, le modèle optimal minimise la fonction coût suivante :

$$S^{PP}\left(m^{PP}\right) = \sum_{\theta}\left\|R_{\theta}^{PP}\left(m^{PP}\right) * w_{\theta}^{PP} - D_{\theta}^{PP}\right\|_{\left(C_{d}^{PP}\right)^{-1}}^{2} + \left\|m^{PP} - m_{prior}^{PP}\right\|_{\left(C_{m}^{PP}\right)^{-1}}^{2} \qquad (1)$$

$m^{PP}$ est le modèle courant représentatif du domaine de sous-sol étudié. Il est décrit par les trois paramètres, impédances P et S et densité $\left(I_{p}^{PP}, I_{s}^{PP}, \rho^{PP}\right)$ et est exprimé en temps PP ; l'exposant PP indique que le modèle est estimé à partir de l'inversion des données PP. Pour un angle d'incidence θ donné, $R_{\theta}^{PP}, w_{\theta}^{PP}$ et $D_{\theta}^{PP}$ sont respectivement la série de coefficients de réflexion (classiquement la formulation de Zoeppritz ou une de ses approximations) correspondant au modèle courant, pour l'angle θ donné, l'ondelette estimée préalablement par calibrage puits-sismique des données sismiques PP associées à l'angle θ, et les données sismiques PP associées à l'angle θ. $m_{prior}^{PP}, C_{d}^{PP}$ et $C_{m}^{PP}$ sont respectivement le modèle a priori PP et les opérateurs de covariance qui décrivent les incertitudes respectivement sur les données PP et le modèle a priori PP.

De façon identique à la méthode proposée dans le brevet FR 2-800-473 du demandeur :

- le premier terme de cette fonction coût mesure l'écart entre les données synthétiques PP correspondant au modèle courant $m^{PP}$ et les données observées PP, au sens de l'inverse de la matrice de covariance $C_d^{PP}$,

- le deuxième terme de cette fonction coût mesure l'écart entre le modèle courant et le modèle a priori $m_{prior}^{PP}$, au sens de l'inverse de la matrice de covariance $C_m^{PP}$.

La construction du modèle a priori et des matrices de covariance reprend également les caractéristiques énoncées dans ce même brevet.

En ce qui concerne l'inversion stratigraphique PS, le modèle optimal minimise la fonction coût $S^{PS}$ ($m^{PS}$) dont l'expression est obtenue en remplaçant simplement PP par PS dans l'équation (1).

2. Détermination du facteur d'échelle ($\eta$)

Dans cette deuxième étape, on recherche le facteur d'échelle $\eta$ permettant d'associer au mieux les temps issus d'une échelle de temps (temps PS) aux temps issus d'une deuxième échelle de temps (temps PP). Ce facteur varie en fonction du temps ainsi que de la position latérale.

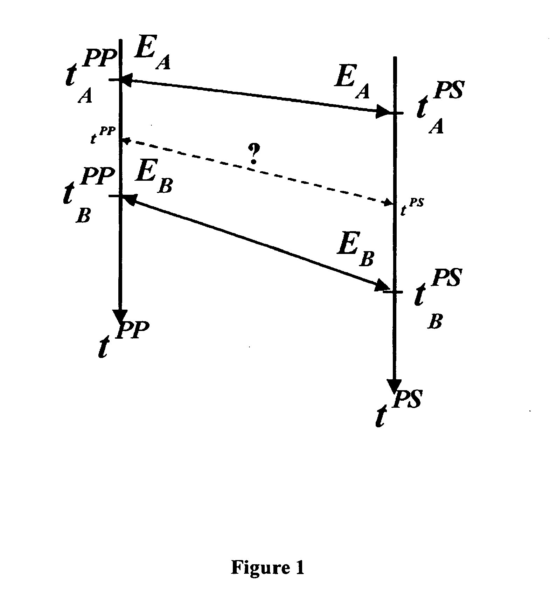

Une phase d'interprétation préliminaire doit être réalisée. Celle-ci est illustrée sur la figure 1. Elle consiste à associer des temps PS ($t^{PS}$) à des temps PP ($t^{PP}$), par interprétation d'évènements correspondant au moins deux réflecteurs géologiques $E_A$ et $E_B$ encadrant la zone d'intérêt. En pratique, les réflecteurs géologiques $E_A$ et $E_B$ correspondent à des marqueurs repérés au voisinage de puits et connus pour avoir une continuité latérale. Cette phase de mise en correspondance d'évènements PP et PS décrite sur la figure 1 est commune à toutes les méthodes visant l'association des temps PP et PS. On note $t_A^{PP}$ (respectivement $t_A^{PS}$) le temps PP (respectivement PS) correspondant au réflecteur $E_A$ et $t_B^{PP}$ (respectivement $t_B^{PS}$) le temps PP (respectivement PS) correspondant au réflecteur $E_B$.

Soit $t^{PP}$ appartenant à l'intervalle $\left[ t_A^{PP}, t_B^{PP} \right]$. Pour un facteur d'échelle $\eta$ donné, le temps PS associé au temps $t^{PP}$ (noté $T_\eta^{PS}$ ($t^{PP}$)) est:

$$T_\eta^{PS}\left( t^{PP} \right) = t_A^{PS} + \int_{t_A^{PP}}^{t^{PP}} \eta(t)\, dt = t_A^{PS} + \int_{t_A^{PP}}^{t^{PP}} \frac{1+\gamma(t)}{2}\, dt \tag{2}$$

Dans le cas décrit ici à partir des données PP et PS, le facteur d'échelle est : $\eta = \frac{1+\gamma}{2}$. La connaissance du facteur d'échelle permet de convertir les temps PP en temps PS et réciproquement.

Le principe de la méthode selon l'invention consiste à déterminer ce facteur d'échelle $\eta$ en minimisant une certaine mesure de la dissemblance entre des quantités connues à la fois en temps PP et PS, entre les réflecteurs géologiques $E_A$ et $E_B$. Il est par exemple possible de déterminer $\eta$ qui minimise une certaine mesure de la dissemblance entre les impédances S obtenues par inversion des données sismiques PP ($I_s^{PP}$) et les impédances S obtenues par inversion des données sismiques PS $(I_s^{PS})$, ces deux types d'impédances étant mis à la même échelle en temps via le facteur d'échelle $\eta$ (la mesure la plus simple de cette dissemblance étant la distance euclidienne entre ces deux impédances S). Plus précisément, $I_s^{PP}$ (respectivement $I_s^{PS}$) est préalablement filtrée dans la bande de fréquence de la sismique PP (respectivement PS) ; en effet ce paramètre étant issu de l'inversion des données sismiques PP (respectivement PS), il n'est bien déterminé que dans la bande de fréquence de ses données. Les 2 impédances ainsi obtenues sont ensuite mises à la même échelle de temps via le facteur d'échelle η, puis comparées (mesure de la dissemblance) dans la plus large bande de fréquence qui leur est commune.

Le problème inverse, à résoudre pour estimer η (minimisation de la dissemblance) dans cette deuxième étape, est très non linéaire et requiert donc l'utilisation d'une procédure d'optimisation globale (telle que le recuit simulé, par exemple). Cette procédure peut être très coûteuse, le coût dépendant du nombre d'inconnues à déterminer. Comme le temps PS associé à un certain temps PP, est l'intégrale en temps du facteur d'échelle η (équation (2)), on peut montrer que le changement d'échelle PP-PS dépend essentiellement du contenu basse fréquence de η. Nous pouvons donc chercher à estimer uniquement ce contenu basse fréquence. On décompose alors η dans une base de fonctions ayant un nombre limité de fonctions de base (une base polynomiale par exemple). On peut utiliser une base orthonormale dont chaque composante est de moyenne nulle. En fait on cherche η dans un espace imposé par la base de recherche :

$$\eta = \overline{\eta} + \sum \alpha_i \Psi_i$$ où $\overline{\eta}$ est une grandeur fixée (valeur a priori, par exemple la moyenne établie à partir des évènements mis en correspondance dans l'étape préliminaire à l'étape 2), $\alpha_i$ est le poids de la i[eme] fonction de base et $\Psi_i$ est la i[eme] fonction de base. De ce fait, on réduit considérablement le nombre d'inconnues et le temps de calcul de cette inversion non linéaire devient tout à fait acceptable. Les fonctions de base peuvent être 1D, 2D ou 3D. Si elles sont 1D par exemple, de tels facteurs d'échelle η peuvent être estimés seulement à certaines positions latérales, puis interpolées latéralement (le long d'une géométrie a priori) dans tout le domaine d'intérêt.

Le facteur d'échelle η (basse fréquence) ainsi obtenu dans tout le domaine, sera noté $\eta_{LF}$.
Comparativement aux méthodes classiques de mise en correspondance des temps PP et PS qui sont réalisées directement à partir des amplitudes des données sismiques PP et PS (Gaiser, 1996) et dont les limitations ont été mentionnées dans « l'état de la technique », les avantages de la méthode sont les suivants :

- les données $I_s^{PP}(t^{PP}), I_s^{PS}(t^{PS})$ que l'on cherche à mettre en correspondance représentent ici la même quantité physique ;

- les données $I_s^{PP}(t^{PP}), I_s^{PS}(t^{PS})$ résultent d'inversions stratigraphiques avant sommation et de ce fait sont beaucoup moins bruitées que les données sismiques de départ ;

- dans la méthodologie d'inversion stratigraphique monocomposante de Tonellot et al (2001), l'étape préliminaire de calibration puits-sismique par laquelle on détermine une ondelette par angle, pour chaque type de données sismiques (PP et PS), permet de limiter au mieux les désaccords de phase entre les deux impédances à associer en temps.

3. Inversion stratigraphique jointe des données exprimées dans des échelles de temps différentes

La troisième étape correspond à l'inversion jointe des données en utilisant le facteur d'échelle $\eta_{LF}$ estimé à la seconde étape.

Dans cette troisième étape on cherche un modèle multiparamètre unique *m* (que l'on exprime par exemple en temps PP), qui minimise la fonction coût J suivante :

$$J(m) = \sum_\theta \left\| R_\theta^{PP}(m) * w_\theta^{PP} - D_\theta^{PP} \right\|^2_{(C_d^{PP})^{-1}} + \sum_\theta \left\| R_\theta^{PS}(m_{LF}) * w_\theta^{PS} - D_\theta^{PS} \right\|^2_{(C_d^{PS})^{-1}} + \left\| m - m_{prior}^{PP} \right\|^2_{(C_m^{PP})^{-1}}$$

où $m_{LF}$ correspond à *m* transformé en temps PS via le facteur d'échelle basse fréquence optimal $\eta_{LF}$ obtenu à l'étape 2. Cette fonction coût est la somme de 3 termes :

- le premier terme mesure l'écart entre les données synthétiques PP correspondant au modèle courant *m* et les données observées PP, au sens de l'inverse de la matrice de covariance $C_d^{PP}$ ;

- le deuxième terme mesure l'écart entre les données synthétiques PS correspondant au modèle courant m transformé en temps PS via le facteur d'échelle $\eta_{LF}$ et les données observées PS, au sens de l'inverse de la matrice de covariance $C_d^{PS}$ ;

- le troisième terme mesure l'écart entre le modèle courant m et le modèle a priori multiparamètre $m_{prior}^{PP}$ , , au sens de l'inverse de la matrice de covariance $C_m^{PP}$ .

Le modèle optimal m expliquera au mieux les amplitudes des données sismiques PP et PS, et ceci en étant suffisamment proche du modèle a priori. Les correspondances entre les temps PP et PS sont assurées par l'intermédiaire du facteur d'échelle basse fréquence $\eta_{LF}$.

Dans cette approche les données sismiques PP et PS sont laissées dans leurs échelles de temps respectives, au lieu d'être ramenées, via le facteur d'échelle $\eta_{LF}$, à une échelle de temps commune (temps PP par exemple) préalablement à l'inversion jointe. En effet, $\eta_{LF}$ variant en temps et spatialement, les données PS ramenées en temps PP subiraient de ce fait une déformation du signal, variable en temps et spatialement ; on ne pourrait alors plus considérer une seule ondelette (dépendant seulement de l'angle θ et du type PP ou PS des données) pour la totalité de la fenêtre en temps et en espace, comme c'est le cas dans la plupart des techniques d'inversion et notamment dans celle utilisée dans la méthode. De plus le fait de ramener les données à une échelle de temps commune pourrait entraîner une création ou une perte d'information.

La méthode peut être très facilement appliquée à tous les types de réflexions PP, PS, SP et SS. Il suffit pour cela d'adapter l'équation (2) au cas considéré.

Elle peut également être appliquée au cas où l'on considère simultanément plus de deux types de données.

La méthode selon l'invention trouve des applications dans des domaines très divers, selon le type d'onde (ondes élastiques, ondes électromagnétiques, etc...) émises pour obtenir les données indirectes de départ.

**Validation de la méthode**

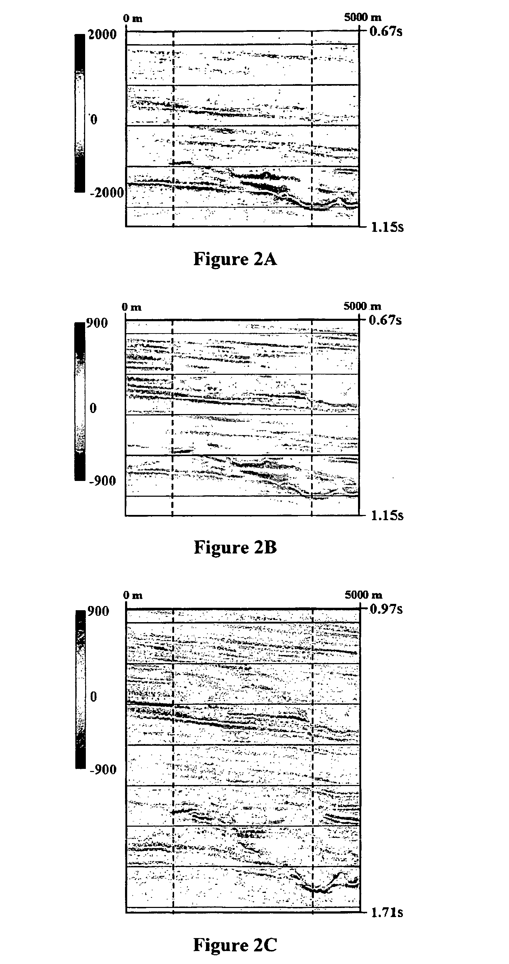

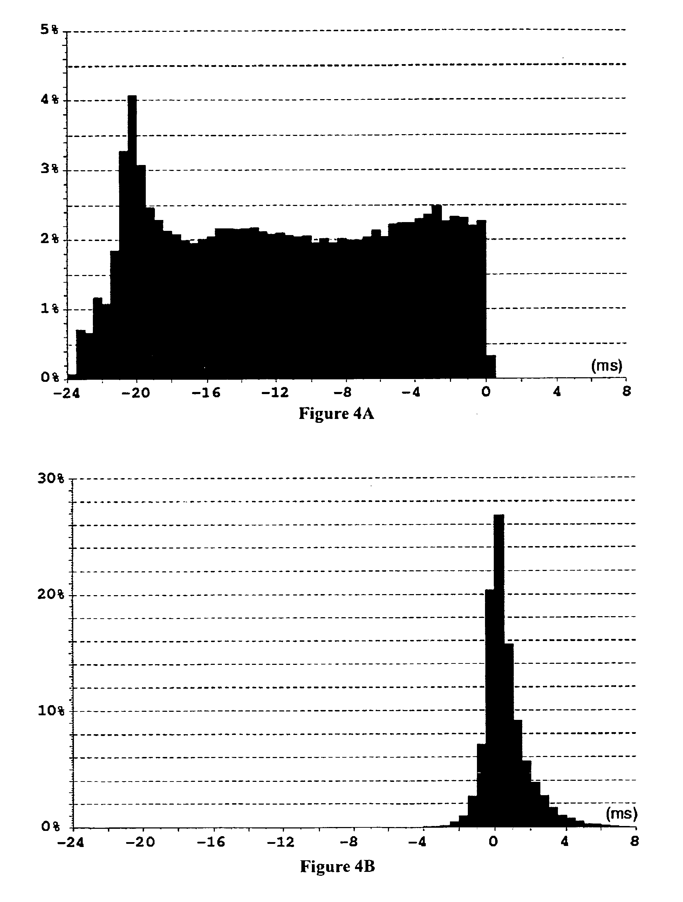

- La méthode selon l'invention est appliquée à des données synthétiques correspondant à un modèle de sous-sol réaliste, tant au point de vue géologique qu'en ce qui concerne les valeurs choisies pour les paramètres élastiques. Une attention particulière a été apportée pour que γ, rapport des vitesses P et S, possède un contenu basse fréquence significatif : de ce fait l'utilisation d'un η constant, égal à la valeur moyenne que l'on peut calculer à partir des évènements encadrant la zone d'intérêt et mis en correspondance dans la phase d'interprétation préliminaire à l'étape 2, conduirait à une erreur dans la transformation des temps PS en temps PP pouvant atteindre 24ms. Ceci est illustré sur la- figure 4A, qui montre l'histogramme de l'erreur sur la transformation en temps PP (axe des abscisses) obtenue en utilisant la valeur moyenne de η pour transformer les temps PS en temps PP. Le modèle qui sera considéré comme modèle exact est obtenu en filtrant les fréquences supérieures à 110Hz. La figure 2A, respectivement 2B, montre l'impédance de type P, respectivement de type S, du modèle exact en temps PP, mises dans la bande passante de la sismique PP. La figure 2C montre l'impédance de type S du modèle exact en temps PS, mise dans la bande passante de la sismique PS. Les données sismiques sont calculées aux angles 5, 15, 25 et 35 degrés en utilisant les approximations d'Aki et Richards (1980) pour calculer les coefficients de réflexion PP et PS. Ceux ci sont ensuite convolués par une ondelette dont la bande de fréquence est 10-110Hz. Un bruit aléatoire de niveau 30% est additionné à chaque donnée-angle. Les données synthétiques ainsi obtenues ont un pas d'échantillonnage en temps de 2ms. Ces données synthétiques vont être utilisées comme données sismiques « observées » pour valider la méthode selon les trois étapes précédemment citées.

Etape 1 :

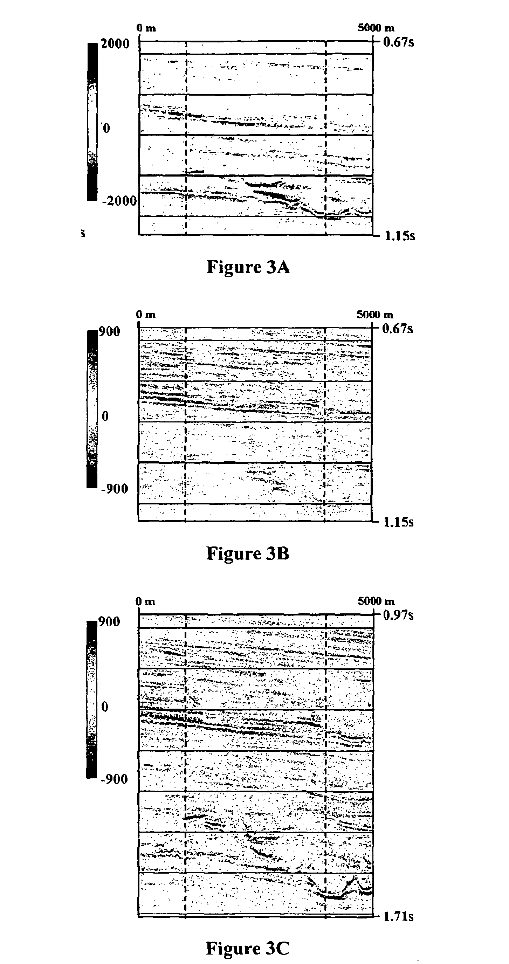

Les modèles a priori PP et PS sont construits à partir de 2 puits localisés aux positions latérales 50 et 200. Les résultats de cette première étape sont les impédances P et S (en temps PP) obtenues à partir de l'inversion PP des données PP ainsi que l'impédance S (en temps PS) obtenue à partir de l'inversion PS des données PS. Les principales différences relativement aux impédances exactes sont dues aux très basses fréquences du modèle a priori qui ne peuvent pas être améliorées par le processus d'inversion. Par contre si on considère les impédances dans la bande de fréquence de la sismique (figures 3A à 3C), les résultats d'inversion sont très satisfaisants. Les figures 3A et 3B présentent le résultat d'inversion monocomposante des données PP en impédance de type P en temps PP (figure 3A) et en impédance de type S en temps PP (figure 3B), mises dans la bande passante de la sismique PP. La figure 3C illustre le résultat d'inversion monocomposante des données PS en impédance de type S en temps PS $(I_S^{PS})$, mise dans la bande passante de la sismique PS. On remarque, comme attendu, que l'impédance S obtenue par inversion des données PS (figure 3C) est bien mieux déterminée que celle obtenue par inversion des données PP (figure 3B).

Etape 2 :

Les seuls évènements préalablement mis en correspondance en temps correspondent au sommet de la fenêtre en temps (67 ms en temps PP) et à l'horizon commençant à 102,8 ms en temps PP (pour la position latérale 0). Le facteur d'échelle optimal basse fréquence $\eta_{LF}$ obtenu par la méthode est satisfaisant : en effet la transformation des temps PS en temps PP, en utilisant ce facteur, conduit à des erreurs en temps très faibles comme l'illustre, en comparaison avec la figure 4A, la figure 4B qui montre l'histogramme de l'erreur sur la transformation en temps PP obtenue en utilisant $\eta_{LF}$ pour transformer les temps PS en temps PP.

Etape 3 :

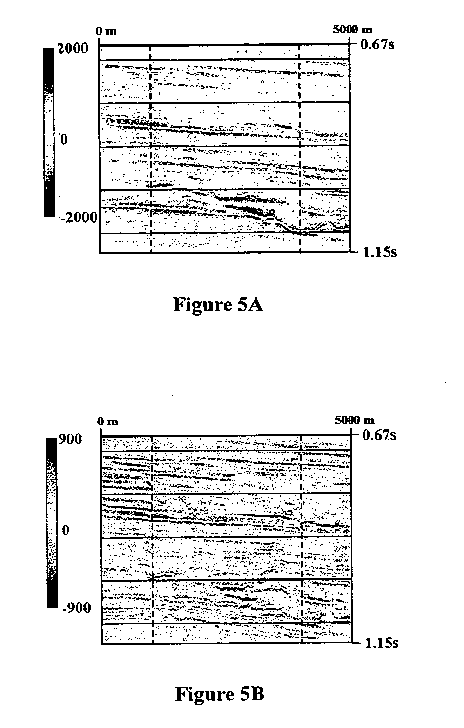

L'inversion jointe des données PP et PS est ensuite réalisée en utilisant le facteur $\eta_{LF}$ déterminé à l'étape 2 : les impédances P et S (en temps PP) obtenues sont représentées, après avoir été filtrées dans la bande passante de la sismique PP, sur les figures 5A (impédances P) et 5B (impédances S).

**Revendications**

1. Méthode pour construire un modèle représentatif d'un milieu hétérogène décrit par au moins une combinaison d'au moins une grandeur physique, à partir d'une procédure d'inversion conjointe de données exprimées dans des échelles de temps différentes, **caractérisée en ce que** la méthode comporte les étapes suivantes :

   - on détermine une première estimation d'au moins une combinaison de grandeurs physiques dudit modèle à partir des données exprimées dans une première échelle de temps;
   - on détermine au moins une seconde estimation de ladite combinaison à partir des données exprimées dans au moins une seconde échelle de temps ;
   - on effectue une analyse desdites estimations pour déterminer au moins un facteur d'échelle permettant d'établir une correspondance entre ladite première échelle de temps et ladite seconde échelle de temps;
   - on réalise, dans le but de construire ledit modèle représentatif, ladite procédure d'inversion conjointe, en minimisant une fonction coût dans laquelle ledit facteur d'échelle permet d'exprimer les données synthétiques associées au modèle courant de l'inversion décrit dans une échelle de temps, dans une autre échelle de temps, de façon à évaluer un écart entre ces données synthétiques et les données exprimées dans ladite autre échelle de temps.

2. Méthode selon la revendication 1, dans laquelle lesdites données exprimées dans des échelles de temps différentes sont des données issues d'émissions d'ondes dans le milieu.

3. Méthode selon la revendication 2, dans laquelle les ondes émises dans le milieu sont des ondes élastiques.

4. Méthode selon la revendication 2, dans laquelle les ondes émises dans le milieu sont des ondes électromagnétiques.

5. Méthode selon l'une des revendications précédentes, dans laquelle les données sont des données sismiques multicomposantes avant sommation.

6. Méthode selon l'une des revendications précédentes, dans laquelle l'une des échelles de temps représente celle des temps d'arrivées des ondes P non converties (réflexions PP).

7. Méthode selon l'une des revendications précédentes, dans laquelle l'une des échelles de temps représente celle des temps d'arrivées des ondes P converties (réflexions PS).

8. Méthode selon l'une des revendications précédentes, dans laquelle l'une des échelles de temps représente celle des temps d'arrivées des ondes S non converties (réflexions SS).

**9.** Méthode selon l'une des revendications précédentes, dans laquelle l'une des échelles de temps représente celle des temps d'arrivées des ondes S converties (réflexions SP).

**10.** Méthode selon l'une des revendications précédentes, dans laquelle la combinaison de grandeurs physiques représente des impédances.

**11.** Méthode selon la revendication 10, dans laquelle les impédances sont des impédances relatives aux ondes S.

**12.** Méthode selon l'une des revendications précédentes, dans laquelle l'estimation des combinaisons de grandeurs physiques comporte l'utilisation d'une inversion monocomposante.

**13.** Méthode selon la revendication 12, dans laquelle ladite inversion est une inversion stratigraphique comportant l'utilisation d'information a priori incluant des données mesurées in situ.

**14.** Méthode selon l'une des revendications 1 ou 2, dans laquelle ledit facteur d'échelle est déterminé en minimisant la dissemblance desdites estimations.

**15.** Méthode selon l'une des revendications précédentes, dans laquelle on détermine seulement la partie basse fréquence dudit facteur d'échelle.

**16.** Méthode selon l'une des revendications précédentes, dans laquelle la détermination dudit facteur d'échelle comporte un paramétrage dudit facteur dans une base constituée d'un nombre limité de fonctions de base.

**17.** Méthode selon l'une des revendications précédentes, dans laquelle lesdites données ne subissent pas de transformation d'échelle.

**Claims**

**1.** A method for constructing a representative model of a heterogeneous environment described by at least one combination of at least one physical quantity from a joint inversion procedure for data expressed in different time scales, **characterised in that** the method comprises the following steps:

- determination of a first estimation of at least one combination of physical quantities of said model from the data expressed in a first time scale;
- determination of at least one second estimation of said combination from the data expressed in at least one second time scale;
- effecting an analysis of said estimations, in order to determine at least one scale factor enabling a correlation to be established between said first time scale and said second time scale;
- carrying out, with the aim of constructing said representative model, said joint inversion procedure, minimising a cost function in which said scale factor enables the expression of the synthetic data associated with the current model of the inversion described in one time scale, in another time scale, so as to evaluate a divergence between this synthetic data and the data expressed in said other time scale.

**2.** The method according to Claim 1, in which said data expressed in different time scales is data resulting from wave emissions in the environment.

**3.** The method according to Claim 2, in which the waves emitted in the environment are elastic waves.

**4.** The method according to Claim 2, in which the waves emitted in the environment are electromagnetic waves.

**5.** The method according to one of the preceding claims, in which the data is multi-component seismic data before summation.

**6.** The method according to one of the preceding claims, in which one of the time scales represents that of the arrival times of the non-converted P waves (PP reflections).

**7.** The method according to one of the preceding claims, in which one of the time scales represents that of the arrival times of the converted P waves (PS reflections).

8. The method according to one of the preceding claims, in which one of the time scales represents that of the arrival times of the non-converted S waves (SS reflections).

9. The method according to one of the preceding claims, in which one of the time scales represents that of the arrival times of the converted S waves (SP reflections).

10. The method according to one of the preceding claims, in which the combination of physical quantities represents impedances.

11. The method according to Claim 10, in which the impedances are impedances relative to the S waves.

12. The method according to one of the preceding claims, in which the estimation of the combinations of physical quantities comprises the use of a mono-component inversion.

13. The method according to Claim 12, in which said inversion is a stratigraphic inversion comprising the use of a priori information including data measured in situ.

14. The method according to one of Claims 1 or 2, in which said scale factor is determined by minimising the dissimilarity between said estimations.

15. The method according to one of the preceding claims, in which only the low frequency part of said scale factor is determined.

16. The method according to one of the preceding claims, in which the determination of said scale factor comprises a parameterisation of said factor in a base constituted by a limited number of base functions.

17. The method according to one of the preceding claims, in which said data does not undergo a scale transformation.


**Patentansprüche**

1. Methode zur Konstruktion eines Modells, das für ein heterogenes Medium repräsentativ ist, das durch mindestens eine Kombination von mindestens einer physikalischen Größe aus einem Verfahren der gemeinsamen Umkehr von Daten, die in unterschiedlichen Zeitstufen ausgedrückt sind, beschrieben ist, **dadurch gekennzeichnet, dass** die Methode die folgenden Schritte umfasst:

   - Bestimmung einer ersten Bewertung von mindestens einer Kombination von physikalischen Größen des Modells auf Basis der Daten, die in einer ersten Zeitstufe ausgedrückt sind,
   - Bestimmung mindestens einer zweiten Bewertung der Kombination auf Basis der Daten, die in mindestens einer zweiten Zeitstufe ausgedrückt sind,
   - Durchführung einer Analyse der Bewertungen, um mindestens einen Stufenfaktor zu bestimmen, der es ermöglicht, eine Entsprechung zwischen der ersten Zeitstufe und der zweiten Zeitstufe herzustellen,
   - zum Zwecke der Konstruktion des repräsentativen Modells Durchführung des Verfahrens der gemeinsamen Umkehr, wobei eine Kostenfunktion, in der es der Stufenfaktor ermöglicht, die synthetischen Daten, mit dem laufenden Modell der Erfindung, das in einer Zeitstufe beschrieben ist, verbunden sind, in einer anderen Zeitstufe auszudrücken, um eine Abweichung zwischen diesen synthetischen Daten und den in der anderen Zeitstufe ausgedrückten Daten zu bewerten.

2. Methode nach Anspruch 1, bei der die in unterschiedlichen Zeitstufen ausgedrückten Daten Daten sind, die von Wellenemissionen in dem Medium stammen.

3. Methode nach Anspruch 2, bei der die in dem Medium emittierten Wellen elastische Wellen sind.

4. Methode nach Anspruch 2, bei der die in dem Medium emittierten Wellen elektromagnetische Wellen sind.

5. Methode nach einem der vorhergehenden Ansprüche, bei der die Daten seismische Mehrkomponentendaten mit Summierung sind.

**6.** Methode nach einem der vorhergehenden Ansprüche, bei der eine der Zeitstufen jene der Ankunftszeiten der nicht konvertierten Wellen P (Reflexionen PP) darstellt.

**7.** Methode nach einem der vorhergehenden Ansprüche, bei der eine der Zeitstufen jene der Ankunftszeiten der konvertierten Wellen P (Reflexionen PS) darstellt.

**8.** Methode nach einem der vorhergehenden Ansprüche, bei der eine der Zeitstufen jene der Ankunftszeiten der nicht konvertierten Wellen S (Reflexionen SS) darstellt.

**9.** Methode nach einem der vorhergehenden Ansprüche, bei der eine der Zeitstufen jene der Ankunftszeiten der konvertierten Wellen S (Reflexionen SP) darstellt.

**10.** Methode nach einem der vorhergehenden Ansprüche, bei der die Kombination von physikalischen Größen Impedanzen aufweist.

**11.** Methode nach Anspruch 10, bei der die Impedanzen Impedanzen in Bezug auf die Wellen S sind.

**12.** Methode nach einem der vorhergehenden Ansprüche, bei der die Bewertung der Kombinationen von physikalischen Größen die Verwendung einer Einkomponentenumkehr umfasst.

**13.** Methode nach Anspruch 12, bei der die Umkehr eine stratigrafische Umkehr ist, umfassend die Verwendung von Information a priori, einschließlich der in situ gemessenen Daten.

**14.** Methode nach einem der Ansprüche 1 oder 2, bei der der Stufenfaktor durch Minimierung der Ungleichheit der Bewertungen bestimmt wird.

**15.** Methode nach einem der vorhergehenden Ansprüche, bei der nur der Niedrigfrequenzteil des Stufenfaktors bestimmt wird.

**16.** Methode nach einem der vorhergehenden Ansprüche, bei der die Bestimmung des Stufenfaktors eine Parametrierung des Faktors in einer Basis, die von einer begrenzten Anzahl von Basisfunktionen gebildet ist, umfasst.

**17.** Methode nach einem der vorhergehenden Ansprüche, bei der die Daten keiner Stufenumwandlung unterzogen werden.

**Figure 1**

**Figure 2A**

**Figure 2B**

**Figure 2C**

**Figure 3A**

**Figure 3B**

**Figure 3C**

Figure 4A

Figure 4B

**Figure 5A**

**Figure 5B**